# EUROPÄISCHE PATENTSCHRIFT

(11) **EP 0 496 058 B1**
(45) Veröffentlichungstag und Bekanntmachung des Hinweises auf die Patenterteilung: **18.01.1995**
(21) Anmeldenummer: 91120361.0
(22) Anmeldetag: 28.11.1991
(51) Int. Cl.: B60T 13/66

(54) **Elektropneumatische Steuereinrichtung für Schienenfahrzeug-Druckluftbremsen**
Electro-pneumatical control device for compressed air brakes of railway vehicles
Dispositif de commande électro-pneumatique pour freins à air comprimé des véhicules ferroviaires

(30) Priorität: 21.01.1991 DE 4101613
(43) Veröffentlichungstag der Anmeldung: 29.07.1992
(73) Patentinhaber: KNORR-BREMSE AG, 80710 München (DE)
(72) Erfinder: Goritz, Bernd, W-8000 München 40 (DE); Huber, Erich, W-8000 München 2 (DE)

(56) Entgegenhaltungen:
- EP-A- 0 304 610
- CH-A- 479 427
- DE-A- 1 165 645
- FR-A- 2 267 225

## Beschreibung

Die Erfindung betrifft eine elektropneumatische Steuereinrichtung für den Druck in der Hauptluftleitung von Schienenfahrzeug-Druckluftbremsen, mit einem Einlaß- und einem Auslaßmagnetventil, deren dichtschließende Absperrventilteile in pneumatischen Verbindungen von einer Hauptbehälterleitung zu einer Steuerkammer bzw. von dieser Steuerkammer zur Atmosphäre eingeordnet sind, wobei die Steuerkammer vermittels einer ein Durchgangsüberwachungselement aufweisenden Verbindung an die Hauptluftleitung angeschlossen ist, und mit einem Relaisventil, das einen vom Druck in der Steuerkammer entgegen dem Druck in der Hauptluftleitung beaufschlagten Kolben zur Betätigung eines ein Einlaß- und ein Auslaßventilteil umfassenden Doppelventils aufweist, wobei das nur bei überwiegendem Druck in der Steuerkammer geöffnete Einlaßventilteil in eine Verbindung von der Hauptbehälterleitung zur Hauptluftleitung und das nur bei überwiegendem Druck in der Hauptluftleitung geöffnete Auslaßventilteil in eine Verbindung der Hauptluftleitung zur Atmosphäre eingeordnet ist.

Eine derartige Steuereinrichtung ist aus der DE-PS 1 165 645 bekannt. Das Einlaß- und das Auslaßmagnetventil sind hierbei als einfache, voneinander gesonderte Magnetventile ausgebildet, deren jedem eine Drosselstelle als Löse- bzw. Bremsdüse nachgeschaltet ist. Das von diesen Magnetventilen gesondert ausgebildete Relaisventil wird aus der Hauptbehälterleitung über ein Rückschlagventil mit Druckluft versorgt, die den Kolben bedaufschlagende Steuerkammer ist in ihrem Volumen durch einen gesondert angeordneten Luftbehälter vergrößert, in eine Verbindung von der Hauptluftleitung zu diesem Luftbehälter ist als Durchgangsüberwachungselement eine Drossel eingeordnet. Durch die ständig geöffnete, gedrosselte Verbindung zwischen der Hauptluftleitung und der Steuerkammer ergibt sich, daß beim Steuern des Druckes in die Steuerkammer vermittels der Magnetventile dieser Steuerkammerdruck durch Luftzu- oder -abfluß von bzw. zur Hauptluftleitung verfälschbar ist, somit kein genaues Einsteuern des jeweils gewünschten Steuerkammerdruckes und damit über das Relaisventil des Hauptluftleitungsdruckes gewährleistet ist. Eine weitere Eigenart dieser bekannten Steuereinrichtung ist darin zu sehen, daß bei Einleiten einer Notbremsung mit entsprechend rascher Druckabsenkung in der Hauptluftleitung durch die gedrosselte Verbindung in der Steuerkammer nur eine verzögerte Druckabsenkung erfolgt, das Relaisventil somit in Richtung zum Nachspeisen des Hauptluftleitungsdruckes aus der Hauptbehälterleitung anspricht und somit die Notbremsung verzögert oder gar aufgehoben wird. Gleiches gilt auch beim Einleiten von Füllstößen in die Hauptluftleitung, bei welchen das Relaisventil der bekannten Steuereinrichtung ansprechen und eine unerwünschte Entlüftung der Hauptluftleitung bewirken würde. Zum Beheben dieser Mängel könnte es naheliegen, die Drosselstelle in der Verbindung von der Hauptluftleitung zur Steuerkammer durch ein Magnetventil zu überbrücken, welches im Ruhezustand der Steuereinrichtung geöffnet und nur bei Betätigen des Einlaß- oder des Auslaßmagnetventils geschlossen wird. Hierdurch ergäbe sich im Ruhezustand der Steuereinrichtung eine ungedrosselte Verbindung zwischen der Steuerkammer und der Hauptlufleitung, wodurch ein unerwünschtes Ansprechen des Relaisventils bei Notbremsungen bzw. Füllstößen ausgeschlossen würde. Durch das zusätzliche Magnetventil wird jedoch der Bauaufwand und insbesondere der Stromverbrauch der Steuereinrichtung wesentlich gesteigert; in langen Zügen mit einer Vielzahl von derartigen, elektropneumatischen Steuereinrichtungen würden diese eine unzulässig hohe Stromeinspeisung in die elektrischen Steuerleitungen erfordern und wären somit gerade in Zugverbänden, in welche diese Steuereinrichtungen besonders erforderlich wären und besondere Vorteile brächten, nicht verwendbar.

Infolge der gesonderten Anordnung der Einzelelemente erfordert die bekannte Steuereinrichtung einen großen Bau- und Montageaufwand.

Es ist Aufgabe der Erfindung eine elektropneumatische Steuereinrichtung der eingangs genannten Art derart auszugestalten, daß sie den Druckvorgängen in der Hauptluftleitung während Notbremsungen und Füllstößen nicht entgegensteuert, dabei jedoch keinen gesteigerten Stromverbrauch aufweist und auch keinen gesteigerten Herstellungs- und Montageaufwand erfordert.

Diese Aufgabe wird nach der Erfindung dadurch gelöst, daß sowohl das Einlaß- wie das Auslaßmagnetventil als 3/2-Wegeventil mit jeweils einem gegensätzlich zum jeweiligen dichtschließenden Absperrventilteil schaltenden, im Schließzustand zumindest als Drosselstelle wirksamen Sekundärventilteil ausgebildet sind und daß die beiden Sekundärventilteile in Serie in die Verbindung zwischen der Steuerkammer und der Hauptluftleitung eingeordnet sind.

Nach der weiteren Erfindung vorteilhafte Ausgestaltungsmöglichkeiten für eine derart ausgebildete Steuereinrichtung sind den Unteransprüchen entnehmbar. Dabei ist hervorzuheben, daß zum Verbilligen der Magnetventile gemäß Unteranspruch 2 deren Sekundärventilteile metallisch dichtend ausbildbar sind und daß zum Verringern der Einbaukosten der Steuereirichtung in eine Schienenfahrzeug-Druckluftbremsanlage gemäß Anspruch 3 das Einlaß- und das Auslaßmagentventil, das Relaisventil und die Steuerkammer zu einer Baueinheit zusammenfaßbar sind, welche nur zwei pneumatische Anschlüsse, nämlich einen zur Hauptluftleitung und einen zur Hauptbehälterleitung, aufweist. Die so gebildete Baueinheit ist auch gut geeignet, als Bestandteil eines Bremssteuerventils zu dienen.

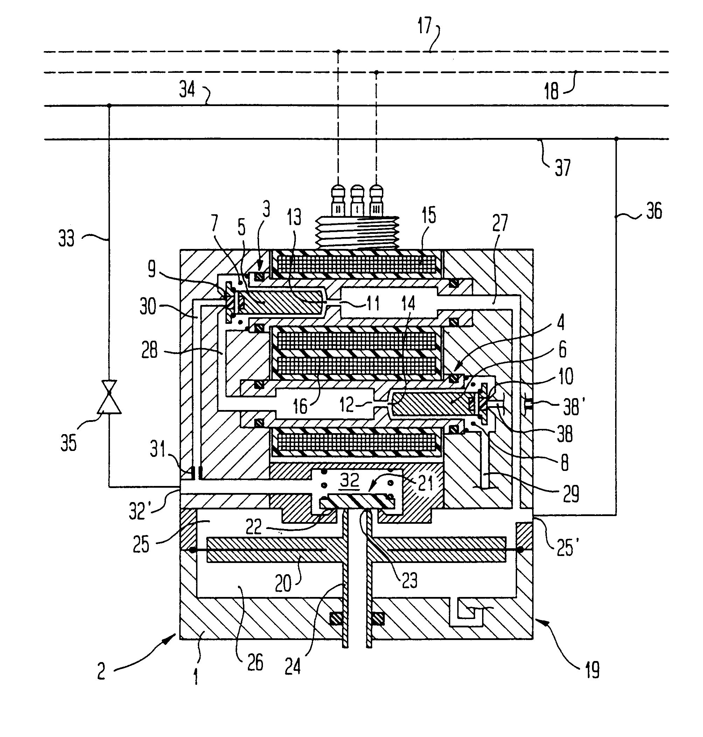

In der Zeichnung ist ein Schnittbild durch eine vorteilhafte Ausführungsform einer nach der Erfindung ausgebildeten, elektropneumatischen Steuereinrichtung dargestellt.

In einem ggf. mehrteilig ausgebildeten Gehäuse 1 der elektropneumatischen Steuereinrichtung 2 befinden sich nebeneinander mit zueinander paralleler Achsrichtung zwei Magnetventile, deren eines ein Einlaßmagnetventil 3 und deren anderes ein Auslaßmagnetventil 4 ist. Jedes der beiden Magnetventile 3,4 weist einen im Gehäuse 1 beweglichen Anker 5 bzw. 6 auf, welcher am in Richtung einer Federbelastung 7 bzw. 8 liegenden Ankerende eine Ventildichtung aus elastischem Werkstoff trägt, die mit einem gehäusefesten Ventilsitz ein Absperrventilteil 9 bzw. 10 bildet. Das jeweils andere Ankerende ist gerundet ausgebildet und bildet zusammen mit einem eine Kanaleinführung 11 bzw. 12 umgebenden Ringflansch am Ende des den Anker 5 bzw. 6 begrenzt axial verschieblich aufnehmenden Raumes ein lediglich metallisch und somit pneumatisch undicht dichtendes Sekundärventilteil 13 bzw. 14. Die beiden Magnetventile 3 und 4 sind also 3/2-Wegemagnetventile mit jeweils einem dichten und einem undichten Ventilteil. Die Anker 5 und 6 sind in Abhängigkeit von der Erregung von Magentspulen 15 bzw. 16 bewegbar, wobei die dem Einlaßmagnetventil 3 zugehörende Magnetspule 15 elektrisch an ein Lösekabel 17 und die dem Auslaßmagnetventil 4 zugeordnete Magnetspule 16 elektrisch an ein Bremskabel 18 angeschlossen ist. Die beiden Kabel 17 und 18 sind durch einen Zugverband kuppelbar und werden je nach den gewünschten Brems- bzw. Lösevorgängen über eine nicht dargestellte Schaltvorrichtung mit Strom versorgt.

Seitlich versetzt zum Einlaßmagnetventil 3 und Auslaßmagnetventil 4 ist im Gehäuse 1 ein Relaisventil 19 mit die Achsrichtungen der genannten Magnetventile rechtwinklig überkreuzender Achsrichtung angeordnet. Das Relaisventil 19 weist einen Kolben 20 zum Betätigen eines Doppelventils 21 mit einem Einlaßventilteil 22 und einem Auslaßventilteil 23 auf. Der Kolben 20 ist von einem Ventilrohr 24 durchsetzt, welches einerseits mit einem dem Auslaßventilteil 23 zugehörenden Ventilsitz endet und andererseits abgedichtet verschieblich aus dem Gehäuse 1 ins Freie ragt und dort offen endet; dieses Ende kann selbstverständlich von einem Luftfilter und/oder Geräuschminderer abgedeckt sein, wie es allgemein üblich ist. Der Kolben 20 trennt eine an das Doppelventil 21 angrenzende Hauptluftleitungskammer 25 von einer Steuerkammer 26 ab. Die Hauptluftleitungskammer 25 ist vermittels eines im Gehäuse 1 verlaufenden Luftführungskanals 27 mit der Kanaleinführung 11 des Einlaßmagnetventilteiles 3, der den Anker 5 des Einlaßmagnetventils 3 aufnehmende Raum über einen weiteren Luftführungskanal 28 mit der Kanaleinführung 12 des Auslaßmagentventiles 4 und der den Anker 6 dieses Auslaßmagnetventiles 4 aufnehmende Raum über einen weiteren Luftführungskanal 29 mit der Steuerkammer 26 verbunden; die beiden Sekudärventilteile 13 und 14 sind somit in Serie in eine pneumatische Verbindung von der Hauptluftleitungskammer 25 zur Steuerkammer 26 eingeordnet. Der gehäusefeste Ventilsitz des Absperrventilteiles 9 umgibt eine Einmündung eines Luftführungskanals 30, der über eine als Lösedüse dienende Drosselstelle 31 an einen weiteren Luftführungskanal angeschlossen ist, welcher einerseits in einen eine Doppeldichtplatte des Doppelventils 21 aufnehmenden Raum 32 und andererseits in einen Rohranschluß 32' am Gehäuse 1 mündet, welcher über eine Rohrleitung 33 an eine Hauptbehälterleitung 34 anzuschließen ist. In die Rohrleitung 33 ist ein nur schematisch angedeutetes Druckminderventil 35 eingeordnet. Die Hauptluftleitungskammer 25 steht mit einem Rohranschluß 25' am Gehäuse 1 in Verbindung, von welchem eine Rohrleitung 36 zu einer Hauptluftleitung 37 führt.

Der gehäusefeste Ventilsitz des Absperrventilteiles 10 umgibt einen Luftführungskanal 38, welcher - ggf. durch einen nicht dargestellten Luftfilter und/oder Geräuschdämpfer in üblicher Weise abgedeckt - über eine Bremsdüse 38' in die Atmosphäre mündet.

Die Hauptbehälterleitung 34 und die Hauptluftleitung 37 gehören der im weiteren nicht dargestellten Druckluftbremse an, sie durchziehen das die elektropneumatische Steuereinrichtung 2 aufweisende Schienenfahrzeug und sind bei dessen Einstellung in einen Zugverband durch diesen ganzen Zugverband zu kuppeln. Die Hauptbehälterleitung 34 ist an eine Druckluftquelle relativ hohen Druckes und die Hauptluftleitung 37 an ein Führerbremsventil anzuschließen.

Im Ruhezustand der elektropneumatischen Steuereinrichtung 2 bei gelöster, betriebsbereiter Druckluftbremse nehmen die Einzelteile der Steuereinrichtung die aus der Zeichnung ersichtlichen Lagen ein: Bei unerregten Magnetspulen 15 und 16 sind die Absperrventilteile 9 und 10 unter den Federbelastungen 7 und 8 geschlossen, während die gegensätzlich schaltenden Sekundärventilteile 13 und 14 geöffnet sind. Die in der Hauptluftleiung 37 herrschende, gelösten Bremsen entsprechende Regeldruckhöhe von beispielsweise 5 bar herrscht infolge der Verbindung durch die Rohrleitung 36 auch in der Hauptluftleitungskammer 25 und infolge der ungedrosselten Verbidung durch die Luftführungskanäle 27, 28 und 29 sowie die zwischen diese eingeordneten, geöffneten Sekundärventilteile 13 und 14 auch in der Steuerkammer 26. Im Raum 32 und im Luftführungskanal 30 steht eine zumindest dieser Regeldruckhöhe entsprechende, durch das Druckminderventil 35 bestimmte Druckhöhe aus der einen höheren Druck führenden Hauptbehälterleitung 34 an. Die beiden Ventilteile des Doppelventils 21 sind infolge der beidseitig gleichen Druckluftbeaufschlagung des Kolbens 20 geschlossen.

Bei Auftreten von Druckänderungen in der Hauptluftleitung 37, wie sie beispielsweise durch Öffnen eines Notbremsventils oder Einleiten eine Fülstoßes verursacht sein können, erfolgen sowohl in der Hauptluftleitungskammer 25 wie durch deren vorerwähnte, ungedrosselte Verbindung zur Steuerkammer 26 zugleich auch in letzterer gleichartige Druckänderungen, so daß der Kolben 20 weiterhin in Ruhe und die beiden Ventilteile des Doppelventils 21 geschlossen bleiben. Die elektropneumatische Steuereinrichtung 2 und insbesondere deren Relaisventil 19 verbleiben also von den Druckänderungen in der Hauptluftleitung 37 unbeeinflußt, insbesondere steuern sie diesen Druckänderung nicht entgegen.

Zum elektropneumatischen Bremsen ist über das Bremskabel 18 die Magnetspule 16 zu erregen, wodurch der Anker 6 unter Öffnen des Absperrventilteiles 10 und Schließen des Sekundärventilteiles 14 entgegen der Federbelastung 8 in seine der dargestellten entgegengesetzte Endlage verschoben wird. Das Öffnen des Absperrventilteiles 10 bewirkt ein Entlüften der Steuerkammer 26 durch die Luftführungskanäle 29 und 38, wobei der Druckgradient in der Steuerkammer 26 durch die Bremsdüse 38' bestimmt ist. Das Schließen des Sekundärventilteiles 14 sperrt oder zumindest drosselt stark die pneumatische Verbindung von der Hauptluftleitungskammer 25 zur Steuerkammer 26, so daß der Entlüftungsvorgang für letztere nicht durch nachströmende Luft aus der Hauptluftleitungskammer 25 bzw. der Hauptluftleitung 37 verändert werden kann. Der Kolben 20 bewegt sich unter der an ihm auftretenden Druckdifferenz in Richtung zur Steuerkammer 26, wodurch sich das Auslaßventilteil 23 zur der Steuerkammer 26 nachfolgenden Entlüftung und Druckabsenkung in der Hauptluftleitungskammer 25 und damit auch der Hauptluftleitung 37 öffnet. Die Druckabsenkungen in der Steuer- und der Hauptluftleitungskammer 26 und 25 sind geichartig, so daß auch der Gradient der Druckabsenkung in der Hauptluftleitung 37 durch die Bremsdüse 38' bestimmt ist. Bei Erreichen der gewünschten Bremsstufe wird die Erregung der Magnetspule 16 unterbrochen, so daß der Anker 6 in die dargestellte Lage zurückkehrt. Die Entlüftung der Steuerkammer 26 wird somit durch Schließen des Absperrventilteiles 10 unterbrochen und die durch Öffnen des Sekundärventilteiles 14 wiedereröffnete, ungedrosselte Verbindung zwischen der Hauptluftleitungskammer 25 und der Steuerkammer 26 bewirkt einen raschen Druckausgleich zwischen beiden, woraufhin der Kolben 20 unter Schließen des Auslaßventilteiles 23 in die dargestellte Lage zurückkehrt. Damit ist das Einsteuern der gewünschten Bremsstufe abgeschlossen.

Zum nachfolgenden, elektropneumatischen Lösen ist über das Lösekabel 17 die Magnetspule 15 zu erregen, so daß analog zu den vorgeschilderten Vorgängen durch Verschieben des Ankers 5 das Absperrventilteil 9 geöffnet und das Sekundärrventilteil 13 geschlossen wird. Vom Druckminderventil 35 und der als Lösedüse dienenden Drosselstelle 31 überwacht strömt Druckluft durch den Luftführungskanal 30, das Absperrventilteil 9, den Luftführungskanal 28, das geöffnete Sekundärventilteil 14 und den Luftführungskanal 29 in die Steuerkammer 26 ein, wobei der Drucksteigerungsgradient durch die Drosselstelle 31 bestimmt ist. Das geschlossene Sekundärventilteil 13 schließt dabei ein Beeinflussen dieser Drucksteigerung in der Steuerkammer 26 durch Strömungsvorgänge zur Hauptluftleitungskammer 25 aus. Die am Kolben 20 auftretende Druckdifferenz hebt diesen zum Öffnen des Einlaßventilteiles 22 derart an, daß aus dem Raum 32 Druckluft so in die Hauptluftleitungskammer 25 und damit die Hauptluftleitung 37 einströmen kann, daß in beiden ein zur Steuerkammer 26 gleichartiger Druckanstieg erfolgt. Sobald die gewünschte Lösestufe erreicht ist, ist die Erregung der Magnetspule 15 zu beenden und das Einlaßmagnetventil 3 kehrt unter seiner Federbelastung 7 in seine dargestellte Schaltstellung zurück. Die Drucklufteinspeisung in die Steuerkammer 26 wird unterbrochen und es erfolgt ein rascher, ungedrosselter Druckausgleich zwischen dieser Steuerkammer 26 und der Hauptluftleitungskammer 25, wodurch der Kolben 20 unter Schließen des Einlaßventilteils 22 in die dargestellte Lage zurückkehrt. Damit ist die gewünschte Lösestufe abgeschlossen.

Selbstverständlich ist es möglich, mehrere Brems- und Lösevorgänge nacheinander und auch in gemischter Reihenfolge aufeinander folgen zu lassen.

Es ist hervorzuheben, daß während der Drucksteuervorgänge für die Steuerkammer 26 diese von der Hauptluftleitungskammer 25 und damit der Hauptluftleitung 37 praktisch abgeschlossen ist, die Drucksteuervorgänge für die Steuerkammer 26 daher von der Länge und dem Volumen der Hauptluftleitung 37 völlig unbeeinflußt ablaufen. Das Volumen der Steuerkammer 26 kann daher relativ klein sein, so daß es beispielsweise, wie dargstellt, als Beaufschlagungsraum für den Kolben 20 voll in das Gehäuse 1 integrierbar ist; es wird also kein gesonderter Luftbehälter benötigt. Die Magnetventile 3 und 4 können der kleinen Steuerkammer 26 entsprechend mit geringen Durchströmungsquerschnitten und somit klein und mit geringem Stromverbrauch ausgebildet werden. Zugleich sorgt das Relaisventil 19 dafür, daß die genau und exakt steuerbaren Druckänderungsvorgänge von der Steuerkammer 26 ebenfalls genau und exakt auf die Hauptluftleitung 37 übertragen werden, und zwar unabhängig von deren Länge und Volumen.

Es ist des weiteren hervorzuheben, daß während der Steuerungsvorgänge jeweils nur ein Vorsteuermagnetventil zu erregen ist, der Stromverbrauch der elektropneumatischen Steuereinrichtung 2 somit sehr gering ist. Durch die Vorschaltung des Druckminderventils 35 erfolgt während Lösevorgängen die Drucklufteinspeisung sowohl in die Steuerkammer 26 wie in die Hauptluftleitungskammer 25 aus einer Druckluftquelle konstanter Druckhöhe, wodurch die Lösevorgänge stets gleichartig, unabhängig von der augenblicklichen Druckhöhe in der Hauptbehälterleitung 34, erfolgen. Gemäß dem Ausführungsbeispiel erfordert die zu einer Baueinheit zusammengefaßte, elektropneumatische Steuereinrichtung 2 lediglich zwei Rohrleitungsanschlüsse 25' und 32', sie ist somit leicht und mit nur geringem Montageaufwand in eine Druckluftbremse einbaubar. Diese Baueinheit ist auch gut geeignet zum Zusammenbau mit einem bzw. zur Integration in ein übliches Bremssteuerventil.

Die beschriebene und dargestellte Anordnung der Magnetventile und des Relaisventils 19 ergibt eine günstige Raumausnutzung und Gestaltungsmöglichkeit für das Gehäuse 1. In Abänderung zu diesem Ausführungsbeispiel ist es auch möglich, die Anordnung der beiden Magnetventile um eine in der Zeichenebene verlaufende, zur Achse des Relaisventils 19 rechtwinklig verlaufende Drehachse um 90° zu drehen, so daß sich die beiden Magnetventile in einer rechtwinklig zur Zeichenebene verlaufenden Ebene nebeneinander befinden. Eine andersartige Abänderung kann darin bestehen, daß die Sekundärventilteile 13 und 14 durch Verwendung von Ventildichtungen aus elastischem Material pnematisch dicht ausgebildet werden.

In Abänderung vom dargestellten Ausführungsbeispiel ist es selbstverständlich auch möglich, die einzelnen Bauelemente Einlaßmagnetventil 3, Auslaßmagnetventil 4 und Relaisventil 19 voneinander gesondert auszubilden und anzuordnen, sie sind dann unter erhöhtem Montageaufwand durch Rohrleitungen zu verbinden. Dabei kann es zum Vermindern des Bauaufwandes unter Inkaufnahme einer Minderung der Steuerungsqualität zweckmäßig sein, nur der Druckluftversorgung des Absperrventilteiles 9 ein kleinquerschnittiges und damit billiges Druckminderventil vorzuschalten, während die Druckluftversorgung des Relaisventils unmittelbar aus der Hauptbehälterleitung 34 erfolgt; es ist jedoch auch möglich, in diese Druckluftversorgung einen zweiten, beispielsweise auf eine abweichende Druckhöhe eingestellten Druckminderer einzuordnen.

Beim Ausführungsbeispiel werden das Einlaß- und das Auslaßmagnetventil 22 und 23 mit Arbeitsstrom betrieben; es ist durch einfache Umgestaltungen, beispielsweise Umkehrung der Federbelastungen 7,8 und Magnetbelastungen der Anker 5,6 auch möglich, eines oder beide dieser Magnetventile mit Ruhestrom zu betreiben.

Kurzfassung:
Die elektropneumatische Steuereinrichtung für den Druck in der Hauptluftleitung (37) von Schienenfahrzeug-Druckluftbremsen ist mit einem Einlaß- und einem Auslaßmagnetventil (3 und 4) zum Steuern des Druckes in einer Steuerkammer (26) eines Relaisventils (19) versehen. Die Druckluftversorgung des Einlaßmagnetventils (3) und des Relaisventils (19) erfolgt aus einer Hauptbehälterleitung (34).

Das vom Druck in der Steuerkammer (26) entgegen dem Druck in der Hauptluftleitung (37) gesteuerte Relaisventil (39) steuert die Druckluftzu- und -abführung für die Hauptluftleitung (37).

Zum Vermeiden unerwünschten Ansprechens des Relaisventils (19) bei anderweitig in die Hauptluftleitung (37) eingesteuerten Druckänderungen werden vermittels Sekundärventilteilen (13 bzw. 14) der beiden Magnetventile (3 und 4) im unbetätigtem Zustand der Steuereinrichtung (2) die beiden Seiten des Kolbens (20) des Relaisventils (19) ungedrosselt kurzgeschlossen.

### Bezugszeichenliste

- 1: Gehäuse
- 2: Steuereinrichtung
- 3: Einlaßmagnetventil
- 4: Auslaßmagnetventil
- 5: Anker
- 6: Anker
- 7: Federbelastung
- 8: Federbelastung
- 9: Absperrventilteil
- 10: Absperrventilteil
- 11: Kanaleinführung
- 12: Kanaleinführung
- 13: Sekundärventilteil
- 14: Sekundärventilteil
- 15: Magnetspule
- 16: Magnetspule
- 17: Lösekabel
- 18: Bremskabel
- 19: Relaisventil
- 20: Kolben
- 21: Doppelventil
- 22: Einlaßventilteil
- 23: Auslaßventilteil
- 24: Ventilrohr
- 25: Hauptluftleitungskammer
- 25': Rohrleitungsanschluß
- 26: Steuerkammer
- 27: Luftführungskanal
- 28: Luftführungskanal
- 29: Luftführungskanal
- 30: Luftführungskanal
- 31: Drosselstelle
- 32: Raum
- 32': Rohrleitungsanschluß
- 33: Rohrleitung
- 34: Hauptbehälterleitung
- 35: Druckminderventil
- 36: Rohrleitung
- 37: Hauptluftleitung
- 38: Luftführungskanal
- 38': Bremsdüse

## Patentansprüche

1. Elektropneumatische Steuereinrichtung für den Druck in der Hauptluftleitung (37) von Schienenfahrzeug-Druckluftbremsen, mit einem Einlaß- und einem Auslaßmagnetventil (3 und 4), deren dichtschließende Absperrventilteile (9 und 10) in pneumatischen Verbindungen von einer Hauptbehälterleitung (34) zu einer Steuerkammer (26) bzw. von dieser Steuerkammer (26) zur Atmosphäre eingeordnet sind, wobei die Steuerkammer (26) vermittels einer ein Durchgangsüberwachelement aufweisenden Verbindung an die Hauptluftleitung (37) angeschlossen ist, und mit einem Relaisventil (19), das einen vom Druck in der Steuerkammer (26) entgegen dem Druck in der Hauptluftleitung (37) beaufschlagten Kolben (20) zur Betätigung eines ein Einlaß- und ein Auslaßventil (23 und 22) umfassenden Doppelventils (21) aufweist, wobei das nur bei überwiegendem Druck in der Steuerkammer (26) geöffnete Einlaßventilteil (22) in eine Verbindung von der Hauptbehälterleitung (34) zur Hauptluftleitung (37) und das nur bei überwiegendem Druck in der Hauptluftleitung (37) geöffnete Auslaßventilteil (23) in eine Verbindung von der Hauptluftleitung (37) zur Atmosphäre eingeordnet ist, dadurch gekennzeichnet, daß sowohl das Einlaß- wie das Auslaßmagnetventil (3 und 4) als 3/2-Wegeventil mit jeweils einem gegensätzlich zum jeweiligen dichtschließenden Absperrventilteil (9 bzw. 10) schaltenden, im Schließzustand zumindest als Drosselstelle wirksamen Sekundärventilteil (13 bzw. 14) ausgebildet sind und daß die beiden Sekundärventilteile (13 und 14) in Serie in die Verbindung zwischen die Steuerkammer (26) und der Hauptluftleitung (37) eingeordnet sind.

2. Steuereinrichtung nach Anspruch 1, dadurch gekennzeichnet, daß die Sekundärventilteile (13 und 14) metallisch dichtend ausgebildet sind.

3. Steuereinrichtung nach Anspruch 1 oder 2, dadurch gekennzeichnet, daß das Einlaß- und das Auslaßmagnetventil (3 und 4), das Relaisventil (19) und die Steuerkammer (26) zu einer Baueinheit (Gehäuse 1) zusammengefaßt sind, welche nur zwei pneumatische Anschlüsse (25' und 32'), nämlich einen zur Hauptluft- und einen zur Hauptbehälterleitung (37 bzw. 34), aufweist.

4. Steuereinrichtung nach Anspruch 3, dadurch gekennzeichnet, daß in der Baueinheit das Einlaß- und das Aulaßmagnetventil (3 und 4) mit jeweils zueinander paralleler, die Achsrichtung des Relaisventils (19) rechtwinklig überkreuzender Achsrichtung angeordnet sind.

5. Steuereinrichtung nach einem oder mehreren der vorstehenden Ansprüche, dadurch gekennzeichnet, daß in die Verbindung von der Hauptbehälterleitung (34) über das Einlaßmagnetventil (3) zur Steuerkammer (26) ein Druckminderventil (35) eingeordnet ist.

6. Steuereinrichtung nach einem oder mehreren der vorstehenden Ansprüche, dadurch gekennzeichnet, daß in die Verbindung von der Hauptbehälterleitung (34) über das Einlaßventilteil (22) zur Hauptluftleitung (37) ein Druckminderventil (35) eingeordnet ist.

7. Steuereinrichtung nach den Ansprüchen 3 oder 4 sowie 5 und 6, dadurch gekennzeichnet, daß in eine Verbindung (Rohrleitung 33) von der Hauptbehälterleitung (34) zum entsprechenden Anschluß (32') der Baueinheit (Gehäuse 1) ein Druckminderventil (35) eingeordnet ist.

## Claims

1. Electropneumatic control device for the pressure in the main air line (37) of compressed air brakes of rail vehicles, having an inlet and an outlet solenoid valve (3 and 4) of which the tightly closing shut-off valve parts (9 and 10) are arranged in pneumatic connections from a main container line (34) to a control chamber (26) and from this control chamber (26) to the atmosphere respectively, the control chamber (26) being connected to the main air line (37) by means of a connection comprising a passage monitoring element, and having a relay valve (19) which comprises a piston (20) which is acted upon by the pressure in the control chamber (26) against the pressure in the main air line (37) in order to actuate a two-way valve (21) comprising an inlet and an outlet valve (23 and 22), the inlet valve part (22) which is only opened when there is predominant pressure in the control chamber (26) being arranged in a connection from the main container line (34) to the main air line (37) and the outlet valve part (23) which is only opened when there is predominant pressure in the main air line (37) being arranged in a connection from the main air line (37) to the atmosphere, characterized in that both the inlet and the outlet solenoid valves (3 and 4) are in the form of 3/2-port directional control valves having in each case a secondary valve part (13 and 14 respectively) which switches in an opposing manner to the respective tightly closing shut-off valve part (9 or 10) and acts as a restrictor at least in the closed state; and in that the two secondary valve parts (13 and 14) are arranged in series in the connection between the control chamber (26) and the main air line (37).

2. Control device according to Claim 1, characterized in that the secondary valve parts (13 and 14) are in the form of metal-to-metal joints.

3. Control device according to Claim 1 or 2, characterized in that the inlet and the outlet solenoid valves (3 and 4), the relay valve (19) and the control chamber (26) are combined to form a structural unit (housing 1) which comprises only two pneumatic connections (25' and 32'), namely one to the main air line and one to the main container line (37 and 34 respectively).

4. Control device according to Claim 3, characterized in that in the structural unit the inlet and outlet solenoid valves (3 and 4) are disposed in axial directions which are parallel to each other in each case and cross the axial direction of the relay valve (19) at a right-angle.

5. Control device according to one or more of the preceding claims, characterized in that a pressure-reducing valve (35) is disposed in the connection from the main container line (34) via the inlet solenoid valve (3) to the control chamber (26).

6. Control device according to one or more of the preceding claims, characterized in that a pressure-reducing valve (35) is disposed in the connection from the main container line (34) via the inlet valve part (22) to the main air line (37).

7. Control device according to Claims 3 or 4 and 5 and 6, characterized in that a pressure-reducing valve (35) is disposed in a connection (pipeline 33) from the main container line (34) to the corresponding connection (32') of the structural unit (housing 1).

## Revendications

1. Dispositif de commande électropneumatique de la pression dans la conduite d'air principale (37) de freins à air comprimé de véhicules sur rails, comportant une valve électromagnétique d'entrée et une valve électrmagnétique de sortie (3 et 4), dont les éléments de blocage (9 et 10), qui réalisent une fermeture étanche, sont insérés dans des liaisons pneumatiques reliant la conduite du réservoir principale (34) à une chambre de commande (26) ou reliant cette chambre de commande (26) à l'atmosphère, et dans lequel la chambre de commande (26) est raccordée, au moyen d'une liaison comportant un élément de contrôle de passage, à la conduite d'air principale (37), et comportant une soupape relais (19), qui possède un piston (20) chargé par la pression régnant dans la chambre de commande (26) à l'encontre de la pression régnant dans la conduite d'air principale (37), pour l'actionnement d'une soupape double (21) comprenant une soupape d'entrée et une soupape de sortie (23 et 22), et dans lequel la partie formant soupape d'entrée (22), qui est ouverte uniquement dans le cas de la présence d'une pression supérieure dans la chambre de commande, est insérée dans une liaison reliant la conduite de réservoir principale (34) à la conduite d'air principale (37), et la partie formant soupape de sortie (23), qui est ouverte uniquement dans le cas de la présence d'une pression prépondérante dans la conduite d'air principale (37), est insérée dans une liaison reliant la conduite d'air principale (37) à l'atmosphère, caractérisé par le fait qu'aussi bien la valve électromagnétique d'entrée que la valve électromagnétique de sortie (3 et 4) sont réalisées sous la forme d'une soupape à 3/2 voies comportant respectivement une partie formant soupape secondaire (13 ou 14), qui commute en sens opposé de la partie de blocage (9 ou 10), qui réalise la fermeture étanche, et agit, à l'état fermé, au moins en tant que point d'étranglement, et que les deux parties formant soupapes secondaires (13 et 14) sont insérées en série dans la liaison entre la chambre de commande (26) et la conduite d'air principale (37).

2. Dispositif de commande suivant la revendication 1, caractérisé par le fait que les parties formant soupapes secondaires (13 et 14) sont agencées de manière à réaliser une étanchéité métal contre métal.

3. Dispositif de commande suivant la revendication 1 ou 2, caractérisé par le fait que la valve électromagnétique d'entrée et la valve électromagnétique de sortie (3, 4), la soupape relais (19) et la chambre de commande (26) sont réunies pour former une unité de construction (boîtier 1), qui possède seulement deux raccords pneumatiques (25' et 32'), à savoir un raccord pour la conduite d'air principale (37) et un raccord pour la conduite de réservoir principale (34).

4. Dispositif de commande suivant la revendication 3, caractérisé par le fait que dans l'unité de construction, la valve électromagnétique d'entrée et la valve électromagnétique de sortie (3 et 4) sont disposées de telle sorte que les directions de leurs axes respectifs sont parallèles et croisent à angle droit la direction de l'axe de la soupape relais (19).

5. Dispositif de commande suivant une ou plusieurs des revendications précédentes, caractérisé par le fait qu'une soupape (35) de réduction de la pression est insérée dans la liaison reliant la conduite de réservoir principale (34) à la chambre de commande (26) par l'intermédiaire de la valve électromagnétique d'entrée (3).

6. Dispositif de commande suivant une ou plusieurs des revendications précédentes, caractérisé par le fait qu'une soupape (35) de réduction de la pression est insérée dans la liaison reliant la conduite de réservoir principale (34) à la conduite d'air principal (37) par l'intermédiaire de la partie formant soupape d'entrée (22).

7. Dispositif de commande suivant les revendications 3 ou 4 ainsi que 5 et 6, caractérisé par le fait qu'une soupape (35) de réduction de la pression est insérée dans la liaison (conduite tubulaire 33) reliant la conduite de réservoir principale (34) au raccord correspondant (32') de l'unité de construction (boîtier 1).
